# EUROPÄISCHE PATENTSCHRIFT

(11) **EP 4 436 912 B1**
(45) Veröffentlichungstag und Bekanntmachung des Hinweises auf die Patenterteilung: **04.02.2026**
(21) Anmeldenummer: 22821280.9
(22) Anmeldetag: 02.12.2022
(51) Int. Cl.: C01B 3/00, C01B 21/082, C01B 25/37

(54) **VERFAHREN ZUR HERSTELLUNG VON NANOPLÄTTCHEN AUS G-C3N4/METALL-VERBUNDMATERIAL**
PROCESS FOR PRODUCING NANOFLAKES FROM G-C3N4/METAL COMPOSITE MATERIAL
PROCÉDÉ DE PRODUCTION DE NANOFLOCONS À PARTIR D'UN MATÉRIAU COMPOSITE G-C3N4/MÉTAL

(30) Priorität: 10.12.2021 AT 509892021
(43) Veröffentlichungstag der Anmeldung: 02.10.2024
(73) Patentinhaber: HYDROSOLID GMBH, 3150 Wilhelmsburg (AT)
(72) Erfinder: SMAJLAJ, Merkur, 30853 Langenhagen (DE); RENZ, Michael, 2325 Himberg (AT)
(74) Vertreter: Puchberger & Partner Patentanwälte
(86) Internationale Anmeldenummer: PCT/AT2022/060424
(87) Internationale Veröffentlichungsnummer: WO 2023/102584

(56) Entgegenhaltungen:
- JI SIYANG ET AL: "Facile Production of a Fenton-Like Photocatalyst by Two-Step Calcination with a Broad pH Adaptability", NANOMATERIALS, vol. 10, no. 4, 11 March 2020 (2020-03-11), pages 676, XP093027835, ISSN: 2079-4991, Retrieved from the Internet <URL:https://www.ncbi.nlm.nih.gov/pmc/ivip/2079-4991/10/4/676> DOI: 10.3390/nano10040676
- DATABASE WPI Week 201536, Derwent World Patents Index; AN 2015-28892V, XP002808742
- DATABASE WPI Week 2020, Derwent World Patents Index; AN 2019-A0709B, XP002808743
- DATABASE WPI Week 201990, Derwent World Patents Index; AN 2019-960322, XP002808744
- NASRI ATEFEH ET AL: "Facile synthesis of graphitic carbon nitride/chitosan/Au nanocomposite: A catalyst for electrochemical hydrogen evolution", INTERNATIONAL JOURNAL OF BIOLOGICAL MACROMOLECULES, ELSEVIER BV, NL, vol. 164, 21 August 2020 (2020-08-21), pages 3012 - 3024, XP086334489, ISSN: 0141-8130, [retrieved on 20200821], DOI: 10.1016/J.IJBIOMAC.2020.08.143
- DATABASE WPI Week 2021001, Derwent World Patents Index; AN 2021-037843, XP002808749

## Beschreibung

Die vorliegende Erfindung betrifft ein Verfahren zur Herstellung von Nanoplättchen aus einem g-C₃N₄/Metall-Verbundmaterial gemäß den Merkmalen des unabhängigen Patentanspruchs 1. Die Erfindung betrifft ferner Nanoplättchen, die mit einem derartigen Verfahren erhältlich sind, sowie Wasserstoff-Speichermaterial sowie einen Photokatalysator, einen Photoelektrokatalysator und einen Elektrokatalysator, die erfindungsgemäße Nanoplättchen enthalten.

Graphitisches Kohlenstoffnitrid, auch als g-C₃N₄ bezeichnet, ist ein Polymermaterial, das gemäß dem Stand der Technik in unterschiedlichen Anwendungsgebieten Verwendung findet, beispielsweise für heterogene Katalyse-Anwendungen oder als Speichermaterial für molekularen Wasserstoff. Bei reinem g-C₃N₄ handelt es sich um eine metallfreie Verbindung, deren Eigenschaften durch Bildung von Verbundmaterialien mit Metallen oder Metallverbindungen angepasst und verbessert werden.

Materialien auf Basis von g-C₃N₄ sind im Stand der Technik bereits bekannt. Der Artikel "Facile Production of a Fenton-Like Photocatalyst by Two-Step Calcination with a Broad pH Adaptability von Siyang Ji et al. (nanomaterials, 2020) beschreibt g-C₃N₄-Nanoplättchen, bei welchen Eisen in das g-C₃N₄ aufgenommen wird. CN 104437643 A beschreibt eine Imprägnierung von g-C₃N₄ mit eisenhältigen Stoffen. CN 110479345 A beschreibt g-C₃N₄-Quantum Dots, die auf Fe-Oxid-Plättchen geträgert sind. Die CN 110429277 A beschreibt ein Schwefel-dotiertes g-C₃N₄-Material, ohne auf die genauen Eigenschaften des enthaltenen Eisens einzugehen. Der Artikel "Facile synthesis of graphitic carbon nitride/chitosam/Au nanocomposite: A catalyst for electrochemical hydrogen evolution" von Atefeh Nasri et al. (International Journal of Biological Macromolecules, 2020) beschreibt ein g-C₃N₄-Gold-Nanokomposit. CN 112156662 A offenbart Nanofasern.

Besonders für die Speicherung von Wasserstoff sowie die photokatalytische Herstellung von Wasserstoff und Sauerstoff aus Wasser sind die Leistungscharakteristika bekannter g-C₃N₄/Metall-Verbundmaterialien jedoch unzureichend. Insbesondere die Speicherkapazität für Wasserstoff und/oder die erzielbare Wasserstoffproduktionsrate sind verbesserungswürdige Faktoren bekannter g-C₃N₄/Metall-Verbundmaterialien.

Es ist somit eine Aufgabe der vorliegenden Erfindung, die Nachteile von bekannten g-C₃N₄/Metall-Verbundmaterialien zu überwinden. Insbesondere kann eine Aufgabe der vorliegenden Erfindung darin gesehen werden, ein g-C₃N₄/Metall-Verbundmaterial zu schaffen, das in Hinblick auf zumindest eines der folgenden Leistungscharakteristika verbessert ist: Speicherkapazität für Wasserstoff, Adsorptionskapazität für Wasserstoff, Wasserstoffproduktionsrate, erzielbare Stromdichte bei Photoelektrokatalyse und Elektrolyse von Wasser.

Im Rahmen der vorliegenden Erfindung wurde überraschenderweise festgestellt, dass diese und weitere Aufgaben insbesondere durch ein Verbundmaterial erreicht werden können, das mit einem erfindungsgemäßen Verfahren hergestellt ist.

Die vorliegende Erfindung betrifft somit ein Verfahren zur Herstellung von g-C₃N₄/Metall-Verbundmaterial-Nanoplättchen, das mehrere Schritte umfasst.

Es ist ein Schritt (a) vorgesehen, der folgende Merkmale aufweist: Bereitstellen eines Ausgangsmaterials umfassend oder bestehend aus einer Eisenverbindung, einem g-C₃N₄-Precursormaterial und einem Polymer. Die Eisenverbindung ist Eisen(III)-Phosphat. Das g-C₃N₄-Precursormaterial ist Harnstoff (CH₄N₂O). Das Polymer ist Polyacrylnitril. Das Ausgangsmaterial ist ein Pulver, dessen Partikel eine durchschnittliche Korngröße von kleiner als 100 nm aufweisen.

Es wurde herausgefunden, dass die Verwendung von Polyacrylnitril im Ausgangsmaterial den Erhalt von Nanoplättchen mit besonders vorteilhaften Eigenschaften erlaubt. Ohne an diese Theorie gebunden zu sein, wird davon ausgegangen, dass das Polyacrylnitril ein Templat bildet, das die geometrischen Parameter, insbesondere Länge, Breite, Form und Orientierung, der hergestellten Nanoplättchen maßgeblich beeinflusst.

Gegebenenfalls ist ein weiterer vorteilhafter technischer Effekt von Polyacrylnitril, dass im Rahmen des Verfahrens eine Cyclisierung des Polyacrylnitrils stattfinden kann, wodurch ein Leiterpolymer gebildet wird, das dem g-C₃N₄-Material besondere Stabilität, insbesondere in Hinblick auf chemische, thermische und mechanische Eigenschaften, verleiht. Beispielsweise kann das Verbundmaterial durch die Verwendung von Polyacrylnitril eine verbesserte Flamm-, Feuer- und Hitzeresistenz erhalten, was insbesondere bei Anwendungen in Zusammenhang mit Wasserstoff vorteilhaft ist, da es bei potentieller Bildung von Knallgas-Gemischen und brennendem Wasserstoff-Gas zu keiner Entzündung des Verbundmaterials kommen kann.

Es ist ein Schritt (b) vorgesehen, der folgende Merkmale aufweist: Dispergieren des Ausgangsmaterials in einem Lösungsmittel, wobei das Lösungsmittel Wasser ist. Das Wasser weist in Schritt (b) gegebenenfalls Siedetemperatur auf. Gegebenenfalls kommt es in diesem Schritt zu einer unvollständigen Lösung des Ausgangsmaterials im Lösungsmittel.

Eine bessere Dispersion, insbesondere erreichbar durch möglichst kleine Durchmesser der Partikel des Ausgangsmaterials, begünstigt die folgende Reaktion zu g-C₃N4, beispielsweise in Hinblick auf Ausbeute und Kinetik.

Es ist ein Schritt (c) vorgesehen, der folgende Merkmale aufweist: Entfernen des Lösungsmittels zum Bilden einer Vormischung, die das Ausgangsmaterial enthält.

Es ist ein Schritt (d) vorgesehen, der folgende Merkmale aufweist: Aufheizen der in Schritt (c) erhaltenen Vormischung und Pyrolysieren der Vormischung bei einer Pyrolysetemperatur zwischen 200°C und 700°C, bevorzugt zwischen 400°C und 600°C, zum Bilden eines Bulk-g-C₃N₄/Metall-Verbundmaterials.

"Bulk-g-C₃N₄/Metall-Verbundmaterial" bezeichnet in Zusammenhang mit der vorliegenden Erfindung insbesondere Material mit zusammenhängender, schichtförmiger Struktur, bei dem gegebenenfalls eine Vielzahl von Schichten überlagert ist.

Es ist ein Schritt (d) vorgesehen, der folgende Merkmale aufweist: Behandeln des Bulk-g-C₃N₄/Metall-Verbundmaterials mit Ultraschall zum Bilden von g-C₃N₄/Metall-Verbundmaterial-Nanoplättchen.

Die Ultraschallbehandlung bewirkt insbesondere eine Exfoliation des g-C₃N₄/Metall-Verbundmaterials, wobei aus dem Bulk-Material Nanoplättchen gebildet werden. Gegebenenfalls wird die Schichtstruktur des Bulk-Materials aufgebrochen, wodurch die Nanoplättchen gebildet werden. Ein weiterer vorteilhafter Effekt der Ultraschallbehandlung kann in einer besseren Verteilung des Metalls zwischen den g-C₃N₄-Schichten bestehen, die dann gegebenenfalls als stabilisierende Spacer fungieren können.

Gegebenenfalls weist der Ultraschall, der zur Behandlung in Schritt (d) eingesetzt wird eine Frequenz zwischen 20 kHz und 100 kHz auf. Gegebenenfalls beträgt der Energieeintrag durch den Ultraschall in Schritt (d) mindestens 0,25 W pro g des Bulk-g-C₃N₄/Metall-Verbundmaterials.

In Zusammenhang mit der vorliegenden Erfindung werden mit "Nanoplättchen" insbesondere Partikel bezeichnet, die genau ein Außenmaß im nanoskaligen Bereich, d.h. zwischen 1 nm und 100 nm, aufweisen.

Die mit dem erfindungsgemäßen Verfahren hergestellten Nanoplättchen bzw. die erfindungsgemäßen Nanoplättchen sind insbesondere nanoporös, d.h. sie weisen Poren mit einer Dimension im sub-100 nm-Bereich auf. Die Nanoporosität wird insbesondere durch die Dispergierung und ein optionales Vermahlen und eine Ultraschallbehandlung in Schritt (b) erreicht.

Gegebenenfalls ist vorgesehen, dass die Menge der Eisenverbindung in Schritt (a) zwischen 1,0 Gew.-% und 20 Gew.-% in Bezug auf die Gesamtmenge des Ausgangsmaterials beträgt.

Gegebenenfalls ist vorgesehen, dass das Dispergieren in Schritt (b) bei einer Temperatur zwischen 80°C und 100°C, bevorzugt zwischen 90°C und 100°C erfolgt. Dadurch kann eine teilweise Lösung des Ausgangsmaterials erfolgen, was gegebenenfalls die Vollständigkeit der Reaktion zu g-C₃N₄ verbessert.

Gegebenenfalls ist vorgesehen, dass das Dispergieren in Schritt (b) unter Behandlung mit Ultraschall erfolgt. Die Behandlung kann beispielsweise mit einem Ultraschallstab erfolgen, der in die Dispersion eingebracht wird. Gegebenenfalls weist der Ultraschall, der zu Behandlung in Schritt (b) eingesetzt wird eine Frequenz zwischen 20 kHz und 100 kHz auf. Gegebenenfalls beträgt der Energieeintrag durch den Ultraschall in Schritt (d) mindestens 0,25 W pro mL der Dispersion. Durch die Ultraschallbehandlung kann eine verbesserte Dispergierung erreicht werden, was gegebenenfalls die Vollständigkeit der Reaktion zu g-C₃N₄ verbessert.

Gegebenenfalls dauert das Dispergieren in Schritt (b) zumindest 1 Stunde, insbesondere etwa 2 Stunden.

Gegebenenfalls ist vorgesehen, dass die Heizrate beim Aufheizen auf die Pyrolysetemperatur in Schritt (d) größer gleich 5°C/min ist.

Gegebenenfalls ist vorgesehen, dass die Pyrolysetemperatur in Schritt (d) etwa 450°C beträgt. Dadurch kann bei Verwendung von Eisen(III)-Phosphat im Ausgangsmaterial Eisen(III)-Phosphat in den Schichten des hergestellten g-C₃N₄/Metall-Verbundmaterials erhalten werden.

Gegebenenfalls ist vorgesehen, dass die Pyrolysetemperatur in Schritt (d) etwa 550°C beträgt. Dadurch kann bei Verwendung von Eisen(III)-Phosphat im Ausgangsmaterial Eisen(III)-Oxid in den Schichten des hergestellten g-C₃N₄/Metall-Verbundmaterials erhalten werden.

Gegebenenfalls dauert die Pyrolyse in Schritt (d) zumindest 4 Stunden, insbesondere etwa 5 Stunden.

Gegebenenfalls ist vorgesehen, dass nach Schritt (d) folgender weiterer Schritt vorgesehen ist: Reduzieren des Eisens im g-C₃N₄/Metall-Verbundmaterial. Gegebenenfalls erfolgt das Reduzieren durch Behandlung des Verbundmaterials mit Wasserstoff. Je nach Ausmaß der Reduktion kann das Eisen in Eisen-(II)-Ionen oder in elementares Eisen umgewandelt werden.

Gegebenenfalls ist vorgesehen, dass in Schritt (a) eine weitere Metallverbindung zugegeben wird, wobei die weitere Metallverbindung ausgewählt ist aus einer Aluminium-, Lithium-, Magnesium-, einer Titan-, einer Nickel-, Platin-, Palladium- und Vanadiumverbindung oder einer beliebigen Mischung dieser Verbindungen.

Durch Zugabe einer weiteren Metallverbindung können die spezifischen Eigenschaften des Verbundmaterials angepasst werden.

Gegebenenfalls ist vorgesehen, dass die Menge der weiteren Metallverbindung in Schritt (a) zwischen 0,5 Gew.-% und 5,0 Gew.-%, bevorzugt etwa 1,0 Gew.-%, in Bezug auf die Gesamtmenge des Ausgangsmaterials beträgt.

Gegebenenfalls ist vorgesehen, dass die Pyrolyse in Schritt (d) unter einer Inertgas-Atmosphäre, insbesondere unter einer Stickstoff-Atmosphäre, erfolgt. Dadurch wird eine Oxidation der Komponenten verhindert.

Gegebenenfalls ist vorgesehen, dass die Komponenten des Ausgangsmaterials in Schritt (a) vermahlen werden, gegebenenfalls in einer Kugelmühle, um eine Korngröße von kleiner als 100 nm zu erreichen.

Es wurde herausgefunden, dass g-C₃N₄/Metall-Verbundmaterial-Nanoplättchen auch mit einem alternativen nicht erfindungsgemäßen Verfahren erhalten werden kann, das mehrere Schritte umfasst:
Gegebenenfalls kann ein Schritt (a') vorgesehen sein, der folgende Merkmale aufweist: Bereitstellen von g-C₃N₄ durch Pyrolysieren eines Gemischs aus einem g-C₃N₄-Precursormaterial und einem Polymer bei einer Pyrolysetemperatur zwischen 200°C und 700°C, bevorzugt zwischen 400°C und 600°C. Das g-C₃N₄-Precursormaterial ist insbesondere Harnstoff. Das Polymer ist insbesondere Polyacrylnitril. Bevorzugt ist das Gemisch ein Pulver mit Partikeln einer durchschnittlichen Korngröße von kleiner als 100 nm.
Gegebenenfalls beträgt die Temperatur beim Pyrolysieren und Schritt (a') etwa 500°. Gegebenenfalls wird die Mischung in Schritt (a') mit einer Heizrate von etwa 5°C/min auf die Pyrolysetemperatur erhitzt. Gegebenenfalls dauert die Pyrolyse in Schritt (a') zumindest 4 Stunden, insbesondere etwa 5 Stunden.
Gegebenenfalls kann ein Schritt (b') vorgesehen sein, der folgende Merkmale aufweist: Mischen des in Schritt (a') erhaltenen g-C₃N₄ mit einer Eisenverbindung, wobei die Eisenverbindung ausgewählt ist aus Eisen-Oxid, Eisen-Sulfid, Eisen-Phosphid, Eisen-Nitrid oder einer beliebigen Mischung daraus, zum Erhalten einer Vormischung. Im Rahmen der vorliegenden Erfindung wurde festgestellt, dass durch Verwendung von Eisen-Oxid, Eisen-Sulfid, Eisen-Phosphid oder Eisen-Nitrid als Eisenverbindung nur dann analoge Ergebnisse wie mit Eisen(III)-Phosphat erhalten werden können, wenn bereits hergestelltes g-C₃N₄ bereitgestellt wird. Gegebenenfalls würde andernfalls lediglich eine Bildung von g-C₃N₄-Clustern um die Eisenverbindungen stattfinden, wodurch kein erfindungsgemäßes Material erhalten werden könnte.
Gegebenenfalls kann ein Schritt (c') vorgesehen sein, der folgende Merkmale aufweist: Vermahlen der in Schritt (b') erhaltenen Vormischung auf eine Partikelgröße von kleiner als 100 nm. Gegebenenfalls kann dies durch Kugelmahlen erreicht werden.
Gegebenenfalls kann ein Schritt (d') vorgesehen sein, der folgende Merkmale aufweist: Behandeln der vermahlenen Vormischung bei einer Temperatur zwischen 400 °C und 600°C zum Bilden von g-C₃N₄/Metall-Verbundmaterial-Nanoplättchen.

Insbesondere beträgt die Temperatur in Schritt (d') etwa 550°C, wodurch ein Eisen(III)-Oxid-Verbundmaterial erhalten werden kann.

Das Behandeln in Schritt (d') bewirkt gegebenenfalls ein Richten der Nanoplättchen und ein Ausheilen von Defekten.

Gegebenenfalls wird Schritt (d') in einer Inertgas-Atmosphäre durchgeführt, insbesondere in einer Stickstoff-Atmosphäre.

Die beiden Verfahren liefern beide g-C₃N₄/Metall-Verbundmaterial-Nanoplättchen als Endprodukt, die vergleichbare Eigenschaften aufweisen. Daher können die Verfahren als Alternativverfahren angesehen werden.

Gegebenenfalls betrifft die Erfindung auch Nanoplättchen, die mit einem erfindungsgemäßen Verfahren erhalten und/oder erhältlich sind. Durch die Verfahrensschritte werden den Nanoplättchen besondere Eigenschaften verliehen, die diese von im Stand der Technik bekannten Nanoplättchen unterscheidet. Insbesondere wird durch Anwendung des erfindungsgemäßen Verfahrens eine Verbundmaterial-Struktur geschaffen, die eine besonders homogene Verteilung von Eisen auf der Oberfläche von g-C₃N₄-Plättchen erlaubt.

Gegebenenfalls ist vorgesehen, dass das Verbundmaterial Poren umfasst, wobei die Poren eine durchschnittliche Porengröße von kleiner als 100 nm aufweisen.

Gegebenenfalls ist vorgesehen, dass das Verbundmaterial in Form von g-C₃N₄-Nanoplättchen vorliegt, auf deren Oberfläche Eisen und/oder die Eisenverbindung getragen ist, wobei das Eisen und/oder die Eisenverbindung in partikulärer Form mit einem Teilchendurchmesser von kleiner als 100 nm vorliegt.

Die Erfindung betrifft auch ein Wasserstoff-Speichermaterial enthaltend oder bestehend aus erfindungsgemäßen g-C₃N₄/Metall-Verbundmaterial-Nanoplättchen. Ferner geoffenbart ist die Verwendung von erfindungsgemäßen g-C₃N₄/Metall-Verbundmaterial-Nanoplättchen als Wasserstoff-Speichermaterial.

Ferner geoffenbart ist ein Verfahren zur Speicherung von Wasserstoff umfassend das Beladen von erfindungsgemäßen g-C₃N₄/Metall-Verbundmaterial-Nanoplättchen mit Wasserstoff-Gas. Gegebenenfalls erfolgt das Beladen bei einem Druck von größer als 10 bar, bevorzugt kleiner als 25 bar.

Gegebenenfalls kann eine Desorption des Wasserstoffs durch Erhitzen des mit beladenen Verbundmaterials erreicht werden, beispielsweise auf eine Temperatur zwischen 60°C und 100°C.

Das Beladen kann durch den Einfluss eines elektrischen Feldes verbessert werden. Die Spannung des elektrischen Feldes beträgt gegebenenfalls mehr als 1000 V.

Die Erfindung betrifft auch einen Photokatalysator enthaltend oder bestehend aus erfindungsgemäßen g-C₃N₄/Metall-Verbundmaterial-Nanoplättchen. Ferner geoffenbart ist die Verwendung von erfindungsgemäßen g-C₃N₄/Metall-Verbundmaterial-Nanoplättchen als Photokatalysator.

Die Erfindung betrifft auch einen Photoelektrokatalysator enthaltend oder bestehend aus erfindungsgemäßen g-C₃N₄/Metall-Verbundmaterial-Nanoplättchen. Ferner geoffenbart ist die Verwendung von erfindungsgemäßen g-C₃N₄/Metall-Verbundmaterial-Nanoplättchen als Photolektrokatalysator.

Die Erfindung betrifft auch einen Elektrokatalysator enthaltend oder bestehend aus erfindungsgemäßen g-C₃N₄/Metall-Verbundmaterial-Nanoplättchen. Ferner geoffenbart ist die Verwendung von erfindungsgemäßen g-C₃N₄/Metall-Verbundmaterial-Nanoplättchen als Elektrokatalysator.

Da es sich bei dem erfindungsgemäßen g-C₃N₄/Metall-Verbundmaterial um einen Halbleiter handelt, dessen Bandlücke mittels Dotierung etc. verändert wird, weist dieser auch katalytische Aktivität auf. Daher ist neben der Wasserstoffspeicherung auch eine Verwendung als Photokatalysator, als Elektrokatalysator oder als Photoelektrokatalysator möglich.

Ferner geoffenbart ist ein Verfahren zur Photoelektrokatalyse von Wasser sowie zur Herstellung von Wasserstoff umfassend das Einbringen von erfindungsgemäßen g-C₃N₄/Metall-Verbundmaterial-Nanoplättchen in Wasser. Gegebenenfalls werden die in Wasser eingebrachten g-C₃N₄/Metall-Verbundmaterial-Nanoplättchen mit einer Strahlungsquelle bestrahlt, die gegebenenfalls eine UV/Vis-Quelle ist. Gegebenenfalls emittiert die Strahlungsquelle elektromagnetische Strahlung mit einer Wellenlänge zwischen 200 nm und 1000 nm.

Weitere optionale Merkmale der vorliegenden Erfindung ergeben sich aus den Patentansprüchen, den Figuren sowie der Beschreibung der Ausführungsbeispiele.

Nachfolgend wird die vorliegende Erfindung anhand von exemplarischen Ausführungsbeispielen im Detail erklärt.

Dabei zeigen:
Fig. 1 die Wasserstoffspeicher-Kapazität eines g-C₃N₄/Metall-Verbundmaterials gemäß einem ersten Ausführungsbeispiel;
Fig. 2 die Wasserstoffspeicher-Kapazität eines g-C₃N₄/Metall-Verbundmaterials gemäß einem zweiten Ausführungsbeispiel; und
Fig. 3 die Wasserstoffspeicher-Kapazität eines g-C₃N₄/Metall-Verbundmaterials gemäß einem dritten Ausführungsbeispiel bei spannungsunterstützter Beladung.

### Ausführungsbeispiel 1

Das erste Ausführungsbeispiel zeigt die Herstellung eines g-C₃N₄/Eisen-Verbundmaterials, wobei als Ausgangsmaterial eine Mischung aus 2 Gew.-% Eisen(III)-Phosphat, 95 Gew.-% Harnstoff und 3 Gew.-%Polyacrylnitril verwendet wird. Die Komponenten werden gemischt und in einer Kugelmühle für etwa 45 min bei 600 rpm vermahlen, um ein Ausgangsmaterial mit einer durchschnittlichen Korngröße von unter 100 nm zu bilden.

Das erhaltene Ausgangsmaterial wird in möglichst wenig Wasser unter Verwendung eines Dispergierstabs und eines Ultraschallbads bei einer Temperatur von etwa 95°C dispergiert.

Nach Abschluss der Dispergierung wird das Wasser entfernt und das verbleibende Material wird unter N₂-Atmosphäre bei einer Pyrolysetemperatur von etwa 550°C für etwa 5 h pyrolysiert. Die Heizrate bis zum Erreichen der Pyrolysetemperatur beträgt etwa 5°C/min.

Es wird ein schichtartig aufgebautes Bulk-g-C₃N₄/Metall-Verbundmaterial erhalten, wobei Eisen(III)-Oxid zwischen den Schichten eingelagert ist.

Anschließend wird das hergestellte Bulk-g-C₃N₄/Metall-Verbundmaterial mittels Ultraschallbehandlung exfoliert, um g-C₃N₄/Metall-Verbundmaterial-Nanoplättchen zu bilden.

Die Verbindung kann als Wasserstoff-Speichermaterial eingesetzt werden. Bei bis zu 25 bar kann eine Wasserstoffspeicher-Kapazität von 9,2 Gew.-% bei etwa -20°C und eine Wasserstoffspeicher-Kapazität von 6,1 Gew.-% bei etwa 25°C erreicht werden. Eine im Wesentlichen vollständige Desorption erfolgt bei etwa 80°C.

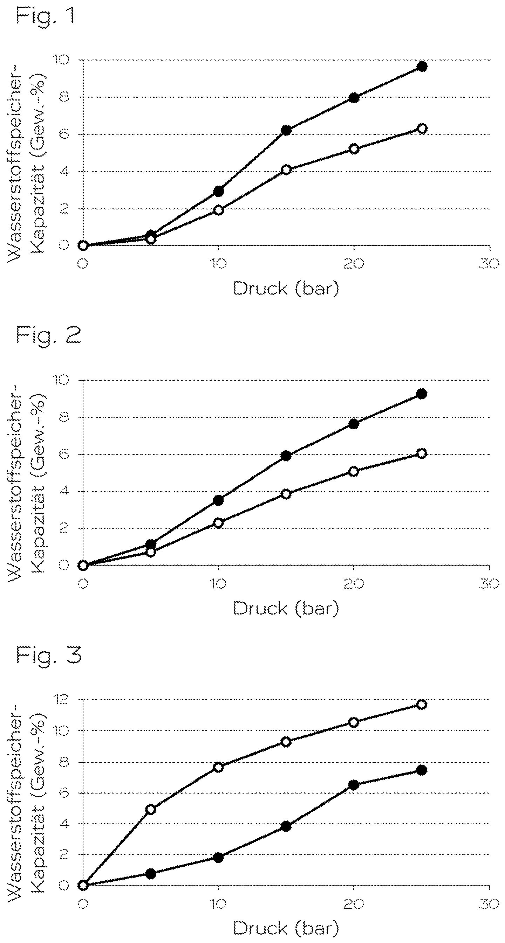

Fig. 1 zeigt die Wasserstoffspeicher-Kapazität des gemäß dem ersten Ausführungsbeispiel hergestellten g-C₃N₄/Metall-Verbundmaterials in Abhängigkeit des Drucks und im Vergleich zwischen etwa -20°C (schwarze Kreise) und etwa 25°C (weiße Kreise).

### Ausführungsbeispiel 2

Das zweite Ausführungsbeispiel zeigt die Herstellung eines g-C₃N₄/Eisen-Titan-Verbundmaterials, wobei als Ausgangsmaterial eine Mischung aus 1 Gew.-% Eisen(III)-Phosphat, 95 Gew.-% Harnstoff und 3 Gew.-%Polyacrylnitril unter weiterer Zugabe von 1 Gew.-% Titandioxid verwendet wird.

Die weiteren Verfahrensschritte werden analog zu jenen aus dem ersten Ausführungsbeispiel durchgeführt.

Es werden Ti-dotierte g-C₃N₄/Fe-Verbundmaterial-Nanoplättchen erhalten, die als Wasserstoff-Speichermaterial eingesetzt werden können. Bei bis zu 25 bar kann eine Wasserstoffspeicher-Kapazität von 9,6 Gew.-% bei etwa -20°C und eine Wasserstoffspeicher-Kapazität von 6,3 Gew.-% bei etwa 25°C erreicht werden. Eine im Wesentlichen vollständige Desorption erfolgt bei etwa 80°C.

Fig. 2 zeigt die Wasserstoffspeicher-Kapazität des gemäß dem zweiten Ausführungsbeispiel hergestellten g-C₃N₄/Metall-Verbundmaterials in Abhängigkeit des Drucks und im Vergleich zwischen etwa -20°C (schwarze Kreise) und etwa 25°C (weiße Kreise).

### Ausführungsbeispiel 3

Das dritte Ausführungsbeispiel zeigt die Herstellung eines g-C₃N₄/Eisen-Titan-Verbundmaterials, wobei als Ausgangsmaterial eine Mischung aus 3 Gew.-% Eisen(III)-Phosphat, 90 Gew.-% Harnstoff und 5 Gew.-%Polyacrylnitril unter weiterer Zugabe von 1 Gew.-% Titandioxid verwendet wird. Die Komponenten werden gemischt und in einer Kugelmühle für etwa 45 min bei 600 rpm vermahlen, um ein Ausgangsmaterial mit einer durchschnittlichen Korngröße von unter 100 nm zu bilden.

Das erhaltene Ausgangsmaterial wird in möglichst wenig Wasser unter Verwendung eines Dispergierstabs und eines Ultraschallbads bei einer Temperatur von etwa 95°C dispergiert.

Nach Abschluss der Dispergierung wird das Wasser entfernt und das verbleibende Material wird unter N₂-Atmosphäre bei einer Pyrolysetemperatur von etwa 450°C für etwa 5 h pyrolysiert. Die Heizrate bis zum Erreichen der Pyrolysetemperatur beträgt etwa 5°C/min.

Es wird ein schichtartig aufgebautes Bulk-g-C₃N₄/Metall-Verbundmaterial erhalten, wobei Eisen(III)-Phosphat zwischen den Schichten eingelagert ist.

Anschließend wird das hergestellte Bulk-g-C₃N₄/Metall-Verbundmaterial mittels Ultraschallbehandlung exfoliert, um g-C₃N₄/Metall-Verbundmaterial-Nanoplättchen zu bilden.

Die Verbindung kann als Wasserstoff-Speichermaterial eingesetzt werden. Bei bis zu 25 bar kann eine Wasserstoffspeicher-Kapazität von 7,4 Gew.-% erreicht werden.

Erfolgt die Beladung des Verbundmaterials unter zusätzlichem Einfluss eines elektrischen Feldes mit einer Spannung von etwa 1400 V, kann eine Wasserstoffspeicher-Kapazität von 11,7 Gew.-% erreicht werden

Fig. 3 zeigt die Wasserstoffspeicher-Kapazität des gemäß dem dritten Ausführungsbeispiel hergestellten g-C₃N₄/Metall-Verbundmaterials in Abhängigkeit des Drucks, wobei die Kapazität ohne spannungsunterstützte Beladung (schwarze Kreise) und mit spannungsunterstützter Beladung (weiße Kreise) verglichen wird.

### Ausführungsbeispiel 4

Das gemäß dem dritten Ausführungsbeispiel hergestellte g-C₃N₄/Metall-Verbundmaterial mit Ti und Fe kann - wie auch beliebige andere erfindungsgemäße Verbundmaterialien - als Elektrophotokatalysator bei der Herstellung von Wasserstoff und Sauerstoff aus Wasser eingesetzt werden.

Wird eine Dispersion des g-C₃N₄/Metall-Verbundmaterials in Wasser mittels UV/Vis-Quelle bestrahlt, kann eine Wasserstoffproduktionsrate von etwa 35,3 mmol/(g*h) erreicht werden. Während der Erzeugung von Wasserstoff kann eine Überspannung von etwa 96 mV gemessen werden. Die Stromdichte beträgt etwa 2,67 mA/cm.

## Patentansprüche

1. **Verfahren** zur Herstellung von g-C₃N₄/Metall-Verbundmaterial-Nanoplättchen umfassend die folgenden Schritte:
a. Bereitstellen eines Ausgangsmaterials umfassend oder bestehend aus einer Eisenverbindung, einem g-C₃N₄-Precursormaterial und einem Polymer,
i. wobei die Eisenverbindung FePO₄,
ii. wobei das g-C₃N₄-Precursormaterial Harnstoff, und
iii. wobei das Polymer Polyacrylnitril ist,
wobei das Ausgangsmaterial als Pulver mit Partikeln einer durchschnittlichen Korngröße von kleiner als 100 nm vorliegt,
b. Dispergieren des Ausgangsmaterials in einem Lösungsmittel, wobei das Lösungsmittel Wasser ist,
c. Entfernen des Lösungsmittels zum Bilden einer Vormischung, die das Ausgangsmaterial enthält,
d. Aufheizen der Vormischung und Pyrolysieren der Vormischung bei einer Pyrolysetemperatur zwischen 200°C und 700°C, bevorzugt zwischen 400°C und 600°C, zum Bilden eines Bulk-g-C₃N₄/Metall-Verbundmaterials,
e. Behandeln des Bulk-g-C₃N₄/Metall-Verbundmaterials mit Ultraschall zum Bilden von g-C₃N₄/Metall-Verbundmaterial-Nanoplättchen.

2. Verfahren nach Anspruch 1, **dadurch gekennzeichnet, dass** die Menge der Eisenverbindung in Schritt (a) zwischen 1,0 Gew.-% und 20 Gew.-% in Bezug auf die Gesamtmenge des Ausgangsmaterials beträgt.

3. Verfahren nach Anspruch 1 oder 2, **dadurch gekennzeichnet, dass** das Dispergieren in Schritt (b) bei einer Temperatur zwischen 80°C und 100°C, bevorzugt zwischen 90°C und 100°C, sowie gegebenenfalls unter Behandlung mit Ultraschall, erfolgt.

4. Verfahren nach einem der Ansprüche 1 bis 3, **dadurch gekennzeichnet, dass** die Heizrate beim Aufheizen auf die Pyrolysetemperatur in Schritt (d) größer gleich 5°C/min ist.

5. Verfahren nach einem der Ansprüche 1 bis 4, **dadurch gekennzeichnet, dass** die Pyrolysetemperatur in Schritt (d) etwa 450°C beträgt, oder dass die Pyrolysetemperatur in Schritt (d) etwa 550°C beträgt.

6. Verfahren nach einem der Ansprüche 1 bis 5, **dadurch gekennzeichnet, dass** das Verfahren nach Schritt (d) folgenden weiteren Schritt umfasst:
- Reduzieren des Eisens im g-C₃N₄/Metall-Verbundmaterial.

7. Verfahren nach einem der Ansprüche 1 bis 6, **dadurch gekennzeichnet, dass** in Schritt (a) eine weitere Metallverbindung zugegeben wird, wobei die weitere Metallverbindung ausgewählt ist aus einer Aluminium-, Lithium-, Magnesium-, Titan-, Nickel-, Platin-, Palladium, Vanadiumverbindung oder einer beliebigen Mischung dieser Verbindungen.

8. Verfahren nach Anspruch 7, **dadurch gekennzeichnet, dass** die Menge der weiteren Metallverbindung in Schritt (a) zwischen 0,5 Gew.-% und 5,0 Gew.-%, bevorzugt etwa 1,0 Gew.-%, in Bezug auf die Gesamtmenge des Ausgangsmaterials beträgt.

9. Verfahren nach einem der Ansprüche 1 bis 8, **dadurch gekennzeichnet, dass** die Pyrolyse in Schritt (d) unter einer Inertgas-Atmosphäre, insbesondere unter einer Stickstoff-Atmosphäre, erfolgt.

10. **g-C₃N₄/Metall-Verbundmaterial** erhältlich mit einem Verfahren nach einem der Ansprüche 1 bis 9, wobei das Verbundmaterial in Form von g-C₃N₄-Nanoplättchen vorliegt, auf deren Oberfläche Eisen und/oder die Eisenverbindung getragen ist, wobei das Eisen und/oder die Eisenverbindung in partikulärer Form mit einem Teilchendurchmesser von kleiner als 100 nm vorliegt.

11. Verbundmaterial nach Anspruch 10, umfassend Poren mit einer durchschnittlichen Porengröße von kleiner als 100 nm.

12. **Wasserstoff-Speichermaterial** enthaltend oder bestehend aus g-C₃N₄/Metall-Verbundmaterial nach einem der Ansprüche 10 oder 11.

13. **Elektrokatalysator** für die Wasserelektrolyse umfassend oder bestehend aus g-C₃N₄/Metall-Verbundmaterial nach einem der Ansprüche 10 oder 11.

14. **Photokatalysator** für die Wasserelektrolyse umfassend oder bestehend aus g-C₃N₄/Metall-Verbundmaterial nach einem der Ansprüche 10 oder 11.

15. **Photoelektrokatalysator** für die Wasserelektrolyse umfassend oder bestehend aus g-C₃N₄/Metall-Verbundmaterial nach einem der Ansprüche 10 oder 11.

## Claims

1. A **method** for producing g-C₃N₄/metal composite material nanoplatelets, comprising the following steps:
a. providing a starting material comprising or consisting of an iron compound, a g-C₃N₄ precursor material, and a polymer,
i. wherein the iron compound is FePO₄,
ii. wherein the g-C₃N₄ precursor material is urea, and
iii. wherein the polymer is polyacrylonitrile,
wherein the starting material is in the form of a powder with particles having an average grain size of less than 100 nm,
b. dispersing the starting material in a solvent, wherein the solvent is water,
c. removing the solvent to form a premix containing the starting material,
d. heating the premix and pyrolysing the premix at a pyrolysis temperature between 200 °C and 700 °C, preferably between 400 °C and 600 °C, to form a bulk g-C₃N₄/metal composite material,
e. treating the bulk g-C₃N₄/metal composite material with ultrasound to form g-C₃N₄/metal composite material nanoplatelets.

2. The method according to claim 1, **characterised in that** the amount of the iron compound in step (a) is between 1.0 wt.% and 20 wt.% relative to the total amount of the starting material.

3. The method according to claim 1 or 2, **characterised in that** the dispersing in step (b) occurs at a temperature between 80 °C and 100 °C, preferably between 90 °C and 100 °C, and, optionally, with ultrasonic treatment.

4. The method according to any one of claims 1 to 3, **characterised in that** the heating rate when heating to the pyrolysis temperature in step (d) is greater than or equal to 5 °C/min.

5. The method according to any one of claims 1 to 4, **characterised in that** the pyrolysis temperature in step (d) is approximately 450 °C, or that the pyrolysis temperature in step (d) is approximately 550 °C.

6. The method according to any one of claims 1 to 5, **characterised in that** the process according to step (d) comprises the following further step:
- reducing the iron in the g-C₃N₄/metal composite material.

7. The method according to any one of claims 1 to 6, **characterised in that** in step (a), a further metal compound is added, wherein the further metal compound is selected from an aluminium, lithium, magnesium, titanium, nickel, platinum, palladium, vanadium compound or any mixture of these compounds.

8. The method according to claim 7, **characterised in that** the amount of the further metal compound in step (a) is between 0.5 wt.% and 5.0 wt.%, preferably about 1.0 wt.%, relative to the total amount of the starting material.

9. The method according to any one of claims 1 to 8, **characterised in that** the pyrolysis in step (d) occurs under an inert gas atmosphere, in particular under a nitrogen atmosphere.

10. A **g-C₃N₄/metal composite material** obtainable by a method according to any one of claims 1 to 9, wherein the composite material has the form of g-C₃N₄ nanoplatelets, the surface of which carries the iron and/or the iron compound, wherein the iron and/or the iron compound is present in particulate form with a particle diameter of less than 100 nm.

11. The composite material according to claim 10, comprising pores with an average pore size of less than 100 nm.

12. A **hydrogen storage material** comprising or consisting of g-C₃N₄/metal composite material according to any one of claims 10 or 11.

13. An **electrocatalyst** for water electrolysis, comprising or consisting of g-C₃N₄/metal composite material according to any one of claims 10 or 11.

14. A **photocatalyst** for water electrolysis, comprising or consisting of g-C₃N₄/metal composite material according to any one of claims 10 or 11.

15. A **photoelectrocatalyst** for water electrolysis, comprising or consisting of g-C₃N₄/metal composite material according to any one of claims 10 or 11.

## Revendications

1. **Procédé** de fabrication de nanoplaquettes composites g-C₃N₄/métal comprenant les étapes suivantes :
a. fournir un matériau de départ comprenant ou consistant en un composé de fer, un matériau précurseur g-C₃N₄ et un polymère,
i. le composé de fer étant FePO₄,
ii. le matériau précurseur g-C₃N₄ étant l'urée, et
iii. le polymère étant le polyacrylonitrile,
le matériau de départ se présentant sous forme de poudre dont les particules ont une granulométrie moyenne inférieure à 100 nm,
b. disperser le matériau de départ dans un solvant, le solvant étant de l'eau,
c. éliminer le solvant pour former un prémélange contenant le matériau de départ,
d. chauffer le prémélange et pyrolyser le prémélange à une température de pyrolyse comprise entre 200 °C et 700 °C, de préférence entre 400 °C et 600 °C, pour former un matériau composite g-C₃N₄/métal en vrac,
e. traiter le matériau composite g-C₃N₄/métal en vrac par ultrasons pour former des nanoplaquettes de matériau composite g-C₃N₄/métal.

2. Procédé selon la revendication 1, **caractérisé en ce que** la quantité du composé de fer dans l'étape (a) est comprise entre 1,0 % en poids et 20 % en poids par rapport à la quantité totale du matériau de départ.

3. Procédé selon la revendication 1 ou 2, **caractérisé en ce que** la dispersion dans l'étape (b) s'effectue à une température comprise entre 80 °C et 100 °C, de préférence entre 90 °C et 100 °C, et éventuellement sous traitement par ultrasons.

4. Procédé selon l'une des revendications 1 à 3, **caractérisé en ce que** la vitesse de chauffage lors du chauffage à la température de pyrolyse à l'étape (d) est supérieure ou égale à 5 °C/min.

5. Procédé selon l'une des revendications 1 à 4, **caractérisé en ce que** la température de pyrolyse à l'étape (d) est d'environ de 450 °C, ou **en ce que** la température de pyrolyse à l'étape (d) est d'environ de 550 °C.

6. Procédé selon l'une des revendications 1 à 5, **caractérisé en ce que** le procédé selon l'étape (d) comprend l'étape supplémentaire suivante :
- réduire le fer dans le matériau composite g-C₃N₄/métal.

7. Procédé selon l'une des revendications 1 à 6, **caractérisé en ce que**, à l'étape (a), un autre composé métallique est ajouté, ledit autre composé métallique étant choisi parmi un composé d'aluminium, de lithium, de magnésium, de titane, de nickel, de platine, de palladium, de vanadium ou tout mélange de ces composés.

8. Procédé selon la revendication 7, **caractérisé en ce que** la quantité du composé métallique supplémentaire dans l'étape (a) est comprise entre 0,5 % en poids et 5,0 % en poids, de préférence d'environ 1,0 % en poids, par rapport à la quantité totale du matériau de départ.

9. Procédé selon l'une des revendications 1 à 8, **caractérisé en ce que** la pyrolyse dans l'étape (d) s'effectue sous une atmosphère de gaz inerte, en particulier sous une atmosphère d'azote.

10. Matériau composite g-C₃N₄/métal pouvant être obtenu par un procédé selon l'une des revendications 1 à 9, le matériau composite se présentant sous la forme de nanoplaquettes de g-C₃N₄ sur la surface desquelles est déposé du fer et/ou le composé de fer, le fer et/ou le composé de fer se présentant sous forme particulaire avec un diamètre de particule inférieur à 100 nm.

11. Matériau composite selon la revendication 10, comprenant des pores dont la taille moyenne est inférieure à 100 nm.

12. Matériau de stockage d'hydrogène contenant ou composé d'un matériau composite g-C₃N₄/métal selon l'une des revendications 10 ou 11.

13. **Électrocatalyseur** pour l'électrolyse de l'eau comprenant ou composé d'un matériau composite g-C₃N₄/métal selon l'une des revendications 10 ou 11.

14. **Photocatalyseur** pour l'électrolyse de l'eau comprenant ou composé d'un matériau composite g-C₃N₄/métal selon l'une des revendications 10 ou 11.

15. **Photoélectrocatalyseur** pour l'électrolyse de l'eau comprenant ou composé d'un matériau composite g-C₃N₄/métal selon l'une des revendications 10 ou 11.
